# EUROPÄISCHE PATENTSCHRIFT

(11) **EP 3 729 385 B1**
(45) Veröffentlichungstag und Bekanntmachung des Hinweises auf die Patenterteilung: **22.06.2022**
(21) Anmeldenummer: 18814975.1
(22) Anmeldetag: 13.12.2018
(51) Int. Cl.: G07C 9/00, G07C 9/23, G07C 9/28, G07C 9/29, H04W 12/08

(54) **ZUGANGSKONTROLLSYSTEM MIT FUNK-AUTHENTIFIZIERUNG UND KENNWORTERFASSUNG**
ACCESS CONTROL SYSTEM WITH WIRELESS AUTHENTICATION AND PASSWORD ENTRY
SYSTÈME DE CONTRÔLE D'ACCÈS À FONCTION D'AUTHENTIFICATION RADIO ET DE SAISIE DU MOT DE PASSE

(30) Priorität: 20.12.2017 EP 17209079
(43) Veröffentlichungstag der Anmeldung: 28.10.2020
(73) Patentinhaber: Inventio AG, 6052 Hergiswil (CH)
(72) Erfinder: TROESCH, Florian, 8703 Erlenbach ZH (CH)
(74) Vertreter: Inventio AG
(86) Internationale Anmeldenummer: PCT/EP2018/084797
(87) Internationale Veröffentlichungsnummer: WO 2019/121336

(56) Entgegenhaltungen:
- EP-A1- 2 237 234
- WO-A1-2015/049186
- WO-A1-2016/087483
- US-A1- 2015 178 698
- US-A1- 2016 248 782

## Beschreibung

Die hier beschriebene Technologie betrifft allgemein ein Zugangskontrollsystem, das einem berechtigten Nutzer Zugang zu einer zugangsbeschränkten Zone in einem Gebäude oder auf einem Gelände gewährt. Ausführungsbeispiele der Technologie betreffen insbesondere ein Zugangskontrollsystem mit einer Sende- und Empfangseinrichtung und ein Verfahren zum Betreiben eines solchen Zugangskontrollsystems.

Zugangskontrollsysteme können auf verschiedenste Art und Weise ausgestaltet sein. Die Ausgestaltungen können beispielsweise die Art betreffen, wie sich Nutzer (Personen) als zugangsberechtigt auszuweisen haben, z. B. mit einem Schlüssel, einer Magnet-, Chip- oder RFID Karte oder einem mobilen elektronischen Gerät (z. B. Mobiltelefon). WO 2010/112586 A1 beschreibt ein Zugangskontrollsystem, bei dem ein von einem Nutzer mitgeführtes Mobiltelefon einen Identifikationscode an einen Zugangsknoten sendet. Falls der Identifikationscode als gültig erkannt wird, sendet der Zugangsknoten einen Zugangscode an das Mobiltelefon, das den Zugangscode auf einer Anzeige dargestellt. Hält der Nutzer das Mobiltelefon an eine Kamera, so dass diese den dargestellten Zugangscode erfassen kann, überprüft das Zugangskontrollsystem, ob der erfasste Zugangscode gültig ist. Ist er gültig, wird dem Nutzer der Zugang gewährt.

US 2016/248782 A1 beschreibt ein Zugangskontrollsystem, das ein tragbares elektronisches Gerät erfasst, das von einem Benutzer in einem ersten Bereich getragen wird, und das einen Zugangscode zum tragbaren elektronischen Gerät sendet. In einem zweiten Bereich präsentiert der Benutzer das tragbare elektronische Gerät einem Zugangsterminal, das den Zugangscode vom tragbaren elektronischen Gerät liest. Wenn der vom Gerät gelesene Zugangscode mit dem vom System an das Gerät gesendeten Zugangscode übereinstimmt, gewährt das Zugangskontrollsystem dem Benutzer Zugang.

US 2015/178698 A1 offenbart ein System für das Einchecken und Bezahlen mit Hilfe von Funkeinrichtungen (Funkbaken). Ein Diensteanbieter kann Funkbaken verwenden, die ein automatisiertes Einchecken mit einem Benutzergerät ermöglichen. Wenn sich das Benutzergerät in der Nähe eines Funkbakens befindet, kann der Benutzer eingecheckt sein und Zahlungen für die Nutzung des Transportdienstes leisten.

In Gebäuden mit vielen Stockwerken kann es zu bestimmten Tageszeiten zu einem hohen Personenverkehrsaufkommen kommen, beispielsweise in einer Eingangshalle eines Bürogebäudes, wenn morgens oder nach einer Mittagspause eine Vielzahl von Arbeitnehmern das Gebäude betritt, um zu ihren Arbeitsplätzen zu gelangen. Zu diesen Zeiten werden nicht nur hohe Anforderungen an die Effizienz eines im Gebäude installierten Aufzugssystems gestellt, sondern auch an das Zugangskontrollsystem, um z. B. eine Schlangenbildung vor einem Zugang so weit wie möglich zu vermeiden. Es besteht daher ein Bedarf an einem Zugangskontrollsystem, das diese Anforderungen erfüllt, wobei die Zugangskontrolle trotzdem zugangsberechtigte Personen zuverlässig von nicht berechtigten Personen unterscheiden kann.

Die obige Aufgabe wird durch die in den unabhängigen Ansprüchen beschriebenen Maßnahmen gelöst.

Ein Aspekt einer solchen Technologie betrifft ein Verfahren zum Betreiben eines Systems zur Kontrolle eines Zugangs zu einer zugangsbeschränkten Zone in einem Gebäude oder auf einem Gelände. Das System umfasst eine Sende- und Empfangseinrichtung zur Funkkommunikation mit von Nutzern mitgeführten mobilen elektronischen Geräten, eine Speichereinrichtung, eine Prozessoreinrichtung und eine Codeerfassungseinrichtung. Eine erste Kennung eines ersten mobilen elektronischen Geräts eines ersten Nutzers wird durch die Sende- und Empfangseinrichtung empfangen, wenn sich das erste mobile elektronische Gerät in einer öffentlichen Zone befindet, von der aus der erste Nutzer Zugang zur zugangsbeschränkten Zone ersuchen kann. Die empfangene erste Kennung wird in der Speichereinrichtung gespeichert, wobei für die erste Kennung ein erster Datensatz angelegt wird, der dem in der öffentlichen Zone anwesenden ersten Nutzer zugeordnet ist. In der Speichereinrichtung ist eine Vielzahl von Datensätzen speicherbar, wobei jeder Datensatz einem in der öffentlichen Zone anwesenden Nutzern zugeordnet ist. Ein erstes Kennwort wird im ersten Datensatz gespeichert, so dass das erste Kennwort der ersten Kennung zugeordnet ist. Durch die Prozessoreinrichtung wird ermittelt, ob die erste Kennung in einer Datenbank einem Nutzerprofil zugeordnet ist, um, wenn eine solche Zuordnung besteht, den ersten Nutzer als zugangsberechtigt zu authentifizieren. Ein vom ersten Nutzer präsentiertes Kennwort wird durch die Codeerfassungseinrichtung erfasst, wenn der erste Nutzer Zugang zur zugangsbeschränkten Zone ersucht. Durch die Prozessoreinrichtung wird ermittelt, ob das erfasste Kennwort mit dem im ersten Datensatz der Speichereinrichtung gespeicherten ersten Kennwort übereinstimmt, wobei bei Übereinstimmung der erste Nutzer als zugangsersuchender Nutzer erkannt wird.

Ein anderer Aspekt der Technologie betrifft ein System zur Kontrolle eines Zugangs zu einer zugangsbeschränkten Zone in einem Gebäude oder auf einem Gelände. Das System umfasst eine Sende- und Empfangseinrichtung zur Funkkommunikation mit einem von einem ersten Nutzer mitgeführten ersten mobilen elektronischen Gerät, die zu einem Empfang einer ersten Kennung des ersten mobilen elektronischen Geräts ausgestaltet ist, wenn sich das erste mobile elektronische Gerät in einer öffentlichen Zone befindet, von der aus der erste Nutzer Zugang zur zugangsbeschränkten Zone ersuchen kann. Eine Speichereinrichtung des Systems ist ausgestaltet, um für die erste Kennung einen ersten Datensatz anzulegen, der dem in der öffentlichen Zone anwesenden ersten Nutzer zugeordnet ist, und um ein erstes Kennwort im ersten Datensatz zu speichern, so dass das erste Kennwort der ersten Kennung zugeordnet ist. In der Speichereinrichtung ist eine Vielzahl von Datensätzen speicherbar. Das System umfasst ausserdem eine Codeerfassungseinrichtung, die ausgestaltet ist, um ein vom ersten Nutzer präsentiertes Kennwort zu erfassen, wenn der erste Nutzer Zugang zur zugangsbeschränkten Zone ersucht. Eine Prozessoreinrichtung des Systems ist ausgestaltet zu ermitteln, ob die erste Kennung in einer Datenbank einem Nutzerprofil zugeordnet ist, und wenn eine solche Zuordnung besteht, den ersten Nutzer als zugangsberechtigt zu authentifizieren; sie ist ausserdem ausgestaltet zu ermitteln, ob das erfasste Kennwort mit dem im ersten Datensatz der Speichereinrichtung gespeicherten ersten Kennwort übereinstimmt, wobei bei Übereinstimmung der erste Nutzer als zugangsersuchender Nutzer erkannt wird.

Die hier beschriebene Technologie schafft ein Zugangskontrollsystem, bei dem eine erste Phase einer Überprüfung, ob der Nutzer zugangsberechtigt ist, erfolgt, wenn der Nutzer noch relativ weit vom Zugang entfernt ist. Der Nutzer kann sich beispielsweise in Richtung des Zugangs zur zugangsbeschränkten Zone bewegen, währenddessen in einem Ausführungsbeispiel das mobile elektronische Gerät des Nutzers schon in Kommunikation mit der Sende- und Empfangseinrichtung des Zugangskontrollsystems ist oder bereits war. Die Sende- und Empfangseinrichtung empfängt die Kennung des mobilen elektronischen Geräts des Nutzers. Ist der Nutzer im Zugangskontrollsystem als zugangsberechtigt registriert, ist für den Nutzer ein Nutzerprofil gespeichert. In diesem Nutzerprofil sind nutzerspezifische Daten (z. B. Name und Rechte), die es erlauben, den Nutzer zu authentifizieren. Möchte der Nutzer Zugang zur zugangsbeschränkten Zone, wird in einer zweiten Phase ein vom Nutzer präsentiertes Kennwort erfasst. Das Kennwort kann z. B. ein auf einer Anzeige des mobilen Geräts dargestelltes codiertes Kennwort sein. Stimmt das erfasste Kennwort mit einem gespeicherten Kennwort überein, ist der Nutzer erkannt und es kann für den Nutzer eine Gebäudeaktion veranlasst werden.

Das Kennwort kann je nach Ausgestaltung in einer Speichereinrichtung des mobilen Geräts gespeichert sein, beispielsweise zusammen mit der Kennung des mobilen Geräts. In diesem Fall sendet das mobile Geräts die Kennung und das Kennwort zur Sende- und Empfangseinrichtung (im Wesentlichen zeitgleich oder zeitlich beabstandet). Die Kennung und das Kennwort werden dann im angelegten Datensatz gespeichert. In einer anderen Ausgestaltung erzeugt das Zugangskontrollsystem das Kennwort, sendet es zum mobilen Gerät und speichert es im für die empfangene Kennung angelegten Datensatz. Auch in diesem Fall speichert der Datensatz sowohl die Kennung als auch das Kennwort. Zu einer zugangsbeschränkten Zone in einem Gebäude oder einem Gebiet kann eine grosse Anzahl von Nutzern (z. B. mehrere Dutzend oder Hundert) zugangsberechtigt sein. In einer solchen Situation empfängt die Sende-und Empfangseinrichtung eine Vielzahl von Kennungen, die in der Speichereinrichtung in Datensätzen gespeichert werden. Trotzdem bietet die hier beschriebene Technologie den Vorteil, dass die Überprüfung auf Übereinstimmung schnell erfolgt, weil das vor Ort erfasste Kennwort nur mit den Kennwörtern der tatsächlich anwesenden Nutzer auf Übereinstimmung überprüft wird. Ein anwesender Nutzer kann somit ohne wesentliche Stockung oder Verzögerung in die zugangsbeschränkte Zone gelangen. Dies reduziert vor allem bei hohem Verkehrsaufkommen das Risiko, dass sich vor dem Zugang eine Warteschlange bildet.

Die Technologie bietet nicht nur eine schnellere Überprüfung, sie kann auch bei hohen Anforderungen an die Sicherheit eingesetzt werden, weil beispielsweise eine Authentifizierung über eine gesicherte (verschlüsselte) Funkverbindung erfolgt. Die per Funk übertragene Kennung muss im System zu einem registrierten Nutzer gehören; dadurch kann der Nutzer erkannt und die für den Nutzer festgelegten Rechte können ermittelt werden. Neben der Funkverbindung wird ein davon getrennter Kanal (z. B. Erfassen eines optischen Codes) genutzt, für den eine von mehreren anwendbaren Technologien verwendet werden kann. Durch diesen Kanal kann erkannt werden, welcher der möglicherweise zahlreichen anwesenden Nutzer tatsächlich Zugang wünscht, so dass nur diesem Nutzer Zugang gewährt und die für diesen Nutzer festgelegte Gebäudeaktion ausgeführt wird.

Bei der hier beschriebenen Technologie ist zum einen die Überprüfung auf Übereinstimmung auf eine begrenzte Menge von Kennwörtern beschränkt. Zum anderen erfolgt die Authentifizierung und Sicherheitsüberprüfung eines Nutzers basierend auf der empfangenen Kennung, die im Fall eines zugangsberechtigten Nutzers einem gespeicherten Nutzerprofil zugeordnet ist. Für die Erfassung und Verarbeitung von Kennwörtern bedeutet dies, dass an die Kennwörter relativ geringe Anforderungen gestellt werden, beispielsweise hinsichtlich Codierung (z. B. (alpha-) numerisch, PIN, QR Code, Strichcode). Es besteht daher grössere Flexibilität hinsichtlich der Wahl der Art des Kennworts; die Anforderungen an die Sicherheit können aber trotzdem gewährleistet werden.

In einem Ausführungsbeispiel umfasst das Prüfen auf Übereinstimmung ein Erzeugen eines Ergebnissignals. Bei Übereinstimmung veranlasst ein Ausführen einer Gebäudeaktion. Die Gebäudeaktion ist spezifisch für den erkannten Nutzer. Um diese Gebäudeaktion zu ermitteln, wird ein in der Speichereinrichtung gespeichertes Nutzerprofil des erkannten Nutzers gelesen; dort kann beispielsweise das Stockwerk angegeben sein, zu dem der Nutzer zugangsberechtigt ist. Die nutzerspezifische Gebäudeaktion kann ein Entriegeln einer Gebäudetür (z. B. Büro- oder Wohnungstür einschliesslich einer oder mehrerer Türen, die sich auf dem Weg vom Zugang zur Büro- oder Wohnungstür befinden) umfassen. In Verbindung mit einer Aufzugsanlage kann die nutzerspezifische Gebäudeaktion auch ein Registrieren eines Zielrufs auf ein für den Nutzer festgelegtes Zielstockwerk umfassen. Dadurch wird die Benutzerfreundlichkeit verbessert, weil der Nutzer direkt zu einer zugeteilten Aufzugskabine gehen kann, ohne selbst einen Aufzugsruf eingeben zu müssen. Die nutzerspezifische Gebäudeaktion kann auch eine Kombination aus dem Entriegeln einer Gebäudetür und dem Registrieren eines Zielrufs umfassen.

Ausserdem gibt das Ergebnissignal an, dass der Nutzer Zugang zur zugangsbeschränkten Zone hat, während es bei Nichtübereinstimmung angibt, dass der Nutzer keinen Zugang zur zugangsbeschränkten Zone hat. Als Funktion des Ergebnissignals kann in einem Ausführungsbeispiel ein Steuersignal erzeugt werden, um eine (physische) Barriere (z. B. Schranke, Tür oder Drehkreuz) freizugeben. Eine nicht freigegebene Barriere bleibt blockiert. In einem anderen Ausführungsbeispiel aktiviert das Steuersignal bei einer Zugangsverwehrung eine Informationseinrichtung. Die Informationseinrichtung kann z. B. in Verbindung mit einem Zugang ohne eine physische Barriere eingesetzt werden. Wird ein unberechtigter Nutzer am Zugang erkannt, kann in einem Fall die Informationseinrichtung einen Alarm erzeugen, der am Zugang wahrnehmbar (akustisch und/oder visuell) ist. Das Steuersignal kann in einem anderen Fall einen Sicherheitsdienst alarmieren, der daraufhin den als nicht zugangsberechtigt erkannten Nutzer überprüft.

In einem Ausführungsbeispiel erfolgt die Funkverbindung zwischen der Sende- und Empfangseinrichtung und einem mobilen elektronischen Gerät eines Nutzers gemäss einem Bluetooth-Standard oder einem WLAN/WiFi-Standard. Dies ist von Vorteil, weil handelsübliche Mobiltelefone oder Smartphones bereits mit Technologie gemäss einem dieser Standards ausgestattet sind und somit keine speziellen Geräte benötigt werden. Die hier beschriebene Technologie ermöglicht auch Flexibilität bezüglich der Kennung eines mobilen Geräts. Die Kennung eines mobilen Geräts kann beispielsweise eine dem Gerät fest zugeordnete Geräteidentifikationsnummer oder eine dem mobilen Gerät zugeordnete Telefonnummer umfassen. In einem Ausführungsbeispiel ist jedes mobile Gerät mit einer anwendungsspezifischen Software ausgestattet, die eine für das mobile Gerät einzigartige und zeitlich unveränderliche Kennung erzeugt. Die Kennung (unabhängig davon, ob sie eine Geräteidentifikationsnummer oder eine Telefonnummer umfasst oder durch Software erzeugt ist) ermöglicht die eindeutige Identifikation eines mobilen Geräts.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung eines Anwendungsbeispiels eines Zugangskontrollsystems in Verbindung mit einem Gebäude;
- Fig. 2: eine schematische Darstellung eines Ausführungsbeispiels eines Zugangskontrollsystems; und
- Fig. 3: ein Ablaufdiagram eines Ausführungsbeispiels eines Zugangskontrollverfahrens als ein Aspekt eines Verfahrens zum Betreiben des Zugangskontrollsystems.

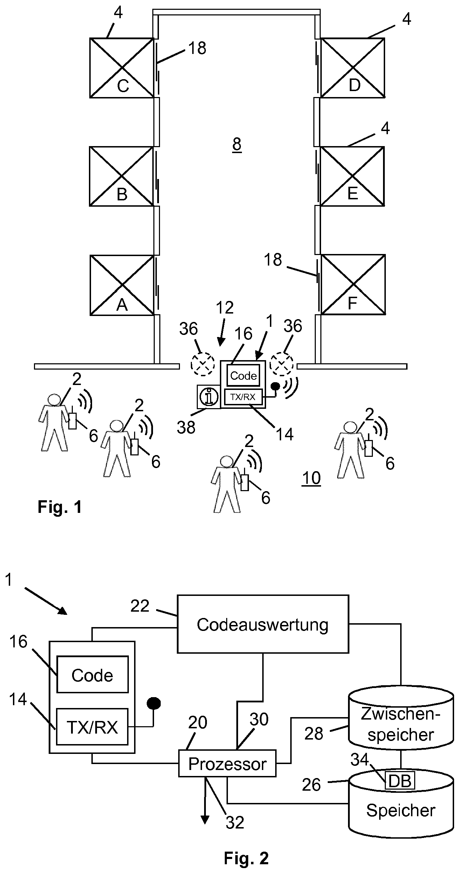

Fig. 1 ist eine schematische Darstellung eines Anwendungsbeispiels eines Zugangskontrollsystems 1 in Verbindung mit einer Situation in einem Gebäude, von dem aus Darstellungsgründen lediglich einige Wände, Räume 4 und Zonen 8, 10 gezeigt sind.

Die Räume 4 können z. B. Büros, Wohnungen, Hallen und/oder Aufzugskabinen eines Aufzugsystems sein. In der in Fig. 1 gezeigten Anwendung des Zugangskontrollsystems 1 befinden sich in der Zone 10 mehrere Nutzer 2, die mobile elektronische Geräte 6 (im Folgenden auch als mobile Geräte 6 bezeichnet), mit sich führen. Die Zone 10 unterliegt in diesem Beispiel keiner Zugangsbeschränkung und wird im Folgenden auch als öffentliche Zone 10 bezeichnet. Die öffentliche Zone 10 kann ein Bereich im oder ausserhalb des Gebäudes sein. Ein Zugang 12 trennt die öffentliche Zone 10 von der Zone 8, die einer Zugangsbeschränkung unterliegt und an die Räume 4 angrenzt. Der Fachmann erkennt, dass das Zugangskontrollsystem 1 nicht auf Anwendungen innerhalb eines Gebäudes beschränkt ist, sondern in analoger Weise auch zur Kontrolle des Zugangs zu einer zugangsbeschränkten Zone auf einem Gelände verwendet werden kann. Unter dem Begriff "Gebäude" sind in dieser Beschreibung z. B. Wohngebäude, Geschäftsgebäude, Sportarenen, Einkaufszentren, aber auch Schiffe zu verstehen.

Das Zugangskontrollsystem 1 überwacht den Zugang 12, sodass nur berechtigte Nutzer 2 in die Zone 8 gelangen können, beispielsweise durch Blockieren oder Freigeben einer Tür, einer Schranke, eines Drehkreuzes, oder einer anderen physischen Barriere oder Schleuse, durch Ansteuern (z. B. Aktivieren) einer Informationseinrichtung 38 im Fall eines Zugangs ohne physische Barriere, wenn ein unberechtigter Nutzer 2 erkannt wird, oder durch Kombinieren dieser Massnahmen. Die Informationseinrichtung 38 kann z. B. einen optischen und/oder akustischen Alarm auslösen oder eine Benachrichtigung eines Sicherheitsdienstes veranlassen. In Fig. 1 ist das Zugangskontrollsystem 1 zur Veranschaulichung als im Zugang 12 angeordnet eingezeichnet. Je nachdem für welches Verkehrsaufkommen das Zugangskontrollsystem 1 vorgesehen ist, besteht der Zugang 12 aus mehreren einzelnen Schleusen; in Fig. 1 kann z. B. jedes der beiden Drehkreuze 36 eine Schleuse darstellen. Der Fachmann erkennt, dass in einer konkreten Implementierung das Zugangskontrollsystem 1 bzw. seine Komponenten auf verschiedene Art und Weise angeordnet sein können.

Die in Fig. 1 dargestellten Räume 4 können beispielsweise zu einer Gruppe von Aufzügen gehören, die z. B. sechs Aufzüge (A-F) umfasst. Wird ein Nutzer 2 am Zugang 12 erkannt, bedeutet dies in einem Ausführungsbeispiel, dass der Nutzer 2 mit einem der Aufzüge auf ein für diesen Nutzer 2 festgelegtes Zielstockwerk transportiert werden möchte. Mit dem Erkennen des Nutzers 2 wird ein Zielruf veranlasst, dem eine Aufzugssteuerung einen Aufzug zuweist. Der zugewiesene Aufzug wird dem Nutzer 2 mitgeteilt, beispielsweise mittels einer Anzeigeeinheit. In der in Fig. 1 gezeigten Situation kann jedem Drehkreuz 36 jeweils eine Anzeigeeinheit zugeordnet sein. Nutzt der Nutzer 2 beispielsweise eines der in Fig. 1 gezeigten Drehkreuze 36, erkennt das Zugangskontrollsystem 1, an welchem Drehkreuz 36 sich der Nutzer 2 befindet und steuert die dort angeordnete Anzeigeeinheit an, um den zugeteilten Aufzug (z. B. "A") anzuzeigen.

Wie in Fig. 1 angedeutet, umfasst das Zugangskontrollsystem 1 gemäss einem Ausführungsbeispiel eine Sende- und Empfangseinrichtung 14 (in Fig. 1 als TX/RX dargestellt) und eine Codeverarbeitungseinrichtung (16); weitere Komponenten des Zugangskontrollsystem 1 sind in Fig. 2 gezeigt. In einem hier beschriebenen Ausführungsbeispiel ist die Sende- und Empfangseinrichtung zum Empfang von Funksignalen ausgestaltet, sie ist im Folgenden auch als Transceiver 14 bezeichnet. Der Transceiver 14 kommuniziert mit den mobilen elektronischen Geräten 6, wenn sie sich in Funkreichweite zum Transceiver 14 befinden, d. h. ein von einem mobilen Gerät 6 ausgesendetes Funksignal hat am Ort des Transceivers 14 eine Signalstärke (beispielsweise ausgedrückt durch einen RSSI-Wert (Received Signal Strength Indicator)), die grösser als ein für einen sicheren Empfang festgelegter Schwellenwert ist. Die Kommunikation erfolgt beispielsweise über ein Nahfeld-Funknetz wie z. B. ein Bluetooth-Funknetz, WLAN/WiFi- oder ein ZigBee-Funknetz. Bluetooth ist ein Standard gemäss IEEE 802.15.1, WLAN/WiFi ist ein Standard gemäss IEEE 802.11, Zig-Bee ist ein Standard gemäss IEEE 802.15.4; solche Funknetze gemäss diesen Standards dienen der kabellosen Vernetzung von Geräten über eine kurze Distanz von ca. einigen Metern bis ca. hundert Meter. Das Funknetz bildet dabei die Schnittstelle, über die das mobile elektronische Gerät 6 und der Transceiver 14 miteinander kommunizieren können.

In der in Fig. 1 gezeigten Situation ist die hier beschriebene Technologie in vorteilhafter Weise anwendbar, um das Zugangskontrollsystem 1 mit möglichst geringer Komplexität zu betreiben und dem Nutzer 2 komfortabel Zugang zur zugangsbeschränkten Zone 8 zu gewähren. Kurz und beispielhaft zusammengefasst erfolgt der Betrieb des Zugangskontrollsystems 1 gemäss einem Ausführungsbeispiel wie folgt: Sobald ein Nutzer 2 in Funkreichweite zum Transceiver 14 ist, kommuniziert sein mobiles Gerät 6 über eine Funkverbindung automatisch mit dem Transceiver 14 und das mobile Gerät 6 sendet seine gerätespezifische Kennung zum Transceiver 14. In der Situation gemäss Fig. 1 empfängt der Transceiver 14 eine Vielzahl von Kennungen. Das Zugangssystem 1 speichert diese Kennungen in dafür angelegten Datensätzen und "weiss" daher, wie viele mobile Geräte 6 sich zu einem bestimmten Zeitpunkt in Funkreichweite befinden und, wenn deren Nutzer 2 für das Gebäude registrierte Nutzer 2 sind, zu welchen Nutzern 2 die mobilen Geräte 6 gehören. Zu diesem Zeitpunkt kann das Zugangskontrollsystem 1 für jeden registrierten Nutzer 2 prüfen, welche Rechte für den Nutzer im Gebäude festgelegt sind (z. B. Zutrittsberechtigung zu einem oder mehreren Räumen 4 und/oder Stockwerken, einschliesslich evtl. zeitlicher Beschränkungen).

Die so erfassten Nutzer 2 stellen eine Gruppe von anwesenden Nutzern 2 dar. Möchte nun einer der anwesenden Nutzer 2 Zugang zur zugangsbeschränkten Zone 8, bewegt sich der Nutzer 2 in Richtung des Zugangs 12. Dort angekommen, präsentiert der Nutzer 2 der Codeverarbeitungseinrichtung (16, 22) ein Kennwort. Das Zugangskontrollsystem 1 ermittelt im Rahmen eines Codeerfassungs- und Codeauswerteverfahrens das Kennwort und vergleicht es mit gespeicherten Kennwörtern, die den anwesenden Nutzern 2 zugeordnet sind. Dieser Vergleich ist auf die Gruppe der anwesenden Nutzer 2 beschränkt; es werden somit nur die Datensätze dieser Gruppe daraufhin durchsucht, ob das ermittelte Kennwort zu einem der gespeicherten Datensätze passt. Dadurch kann erkannt werden, welcher der anwesenden Nutzer 2 zu diesem Zeitpunkt tatsächlich Zugang wünscht und - je nach Ausgestaltung - an welcher Schleuse (z. B. Drehkreuz 36) sich der Nutzer 2 befindet. Für diesen Nutzer 2 kann beispielsweise eine in einem Nutzerprofil festgelegte Gebäudeaktion veranlasst werden; für den Nutzer 2 können beispielsweise ein Zielruf registriert und daran anschliessend ein Aufzug zugeteilt werden, der den Nutzer 2 auf das Stockwerk transportiert, auf dem sich der Arbeitsplatz des Nutzers 2 befindet.

Fig. 2 zeigt eine schematische Darstellung eines Ausführungsbeispiels des Zugangskontrollsystems 1. Das Zugangskontrollsystem 1 ist in einem Ausführungsbeispiel modular aufgebaut und umfasst die Codeverarbeitungseinrichtung, die eine Codeerfassungseinrichtung 16 (Code in Fig. 2) und ein Codeauswertemodul 22 (Codeauswertung in Fig. 2) umfasst. Zusätzlich umfasst das Zugangskontrollsystem 1 den Transceiver 14, einen Prozessor 20, eine Speichereinrichtung 26 (Speicher in Fig. 2) und eine Zwischenspeichereinrichtung 28 (Zwischenspeicher in Fig. 2). Der Fachmann erkennt, dass mindestens eine der Speichereinrichtungen 26, 28 auch der Codeverarbeitungseinrichtung (16, 22) zugeordnet werden kann oder dass die Funktion der Zwischenspeichereinrichtung 28 durch die Speichereinrichtung 26 wahrgenommen werden kann und somit die Zwischenspeichereinrichtung 28 in einem Ausführungsbeispiel entfallen kann.

Der Prozessor 20 hat einen Ausgang 32 für ein Steuersignal und einen Eingang 30 für ein vom Codeauswertemodul 22 erzeugtes Ergebnissignal. Abhängig vom Ergebnissignal steuert der Prozessor 20 das Zugangskontrollsystem 1 so, dass dem Nutzer 2 Zugang gewährt oder verwehrt wird. Bei Zugangsgewährung kann beispielsweise auch ein Zielruf veranlasst werden und der diesem Zielruf zugeteilte Aufzug kann dem Nutzer 2 angezeigt werden. Trennt beispielsweise eine physische Barriere (z. B. Drehkreuz 36 in Fig. 1) die Zonen 8, 10, gibt das Steuersignal die Barriere frei (beispielsweise in Verbindung mit der Anzeige des zugeteilten Aufzugs) oder blockiert diese. Erfolgt die Zonentrennung dagegen ohne eine physische Barriere, steuert das Steuersignal im Fall eines unberechtigten Nutzers 2 beispielsweise die Informationseinrichtung 38 für eine Alarmerzeugung an oder alarmiert einen Sicherheitsdienst. Die Informationseinrichtung 38 kann auch angesteuert werden, um in Verbindung mit einer Barriere dem Nutzer 2 oder einem Sicherheitsdienst anzuzeigen, dass die Barriere freigegeben oder blockiert wurde.

Die Codeerfassungseinrichtung 16 kann ein Lesegerät umfassen, das Daten basierend auf einer von unterschiedlichen bekannten Technologien erfassen kann. Das Lesegerät kann beispielsweise Daten von Magnetkarten, Chipkarten, RFID Karten oder mobilen elektronischen Geräten (z. B. Mobiltelefone, Smartphone, Tablet) lesen, oder Daten von optischen Codes (Barcodes, QR Codes, Farbcodes), die auf verschiedenen Trägermaterialien aufgedruckt sind oder auf Anzeigen von mobilen elektronischen Geräten (z. B. Mobiltelefone, Smartphone, Tablet) dargestellt werden, erfassen. Das Lesegerät kann in einem anderen Ausführungsbeispiel eine Vorrichtung zum Erfassen und/oder Erkennen von biometrischen Parametern (z. B. Muster von Fingerkuppen, Handflächen oder Augen (Iris), oder Charakteristika von Stimmen) umfassen.

Kommt im Lesegerät beispielsweise die Radio Frequency Identification (RFID) Technologie zur Anwendung, ist das Lesegerät ein RFID Leser, der Daten von einer in Funkreichweite platzierten RFID Karte empfängt. Die Daten, beispielsweise einen Identifikationscode umfassend, sind in einem Datenspeicher der RFID Karte gespeichert. Die vom RFID Leser und der RFID Karte verwendete Funkfrequenz beträgt beispielsweise 125 kHz, 13,56 MHz oder 2,45 GHz. Kommt dagegen eine optische Technologie zur Anwendung, ist das Lesegerät ein optisches Lesegerät (z. B. eine Kamera oder ein Scanner), das das Muster eines optischen Codes, der auf einem Trägermaterial aufgedruckt ist oder auf einem elektronischen Gerät angezeigt wird, erfasst. Eine beispielhafte Technologie zum Erzeugen und Erfassen eines auf einem elektronischen Gerät angezeigten optischen Farbcodes ist in WO 2015/049186 beschrieben.

Der Transceiver 14 und die Codeerfassungseinrichtung 16 (einschliesslich anderer Komponenten der Codeverarbeitungseinrichtung) können in einem Gehäuse, das z. B. wie in Fig. 1 gezeigt im Zugang 12 angeordnet ist, angeordnet sein. Alternativ dazu können der Transceiver 14 und die Codeerfassungseinrichtung 16 (einschliesslich anderer Komponenten der Codeverarbeitungseinrichtung) auch getrennt voneinander als separate Einheiten angeordnet sein, beispielsweise räumlich voneinander getrennt in einem Bereich um den Zugang 12, wobei die Codeerfassungseinrichtung 16 so anzuordnen ist, dass sie für die Nutzer 2 zugänglich ist und zwar so, dass die Nutzer 2 der Reihe nach ihre Kennwörter präsentieren können. In einer Ausgestaltung des Zugangskontrollsystems 1 ist an jeder Barriere (z. B. Drehkreuz 36) eine Codeerfassungseinrichtungen 16 vorhanden.

Das Codeauswertemodul 22 ist zur Veranschaulichung als separate Einheit gezeigt, die mit dem Prozessor 20 und der Zwischenspeichereinrichtung 28 verbunden ist. In einem Ausführungsbeispiel bilden das Codeauswertemodul 24 und die Codeerfassungseinrichtung 16 eine Einheit. Die Speichereinrichtungen 26, 28 sind ebenfalls zur Veranschaulichung als separate Einheiten gezeigt; je nach Ausgestaltung können sie in einer Speichereinrichtung zusammengefasst sein, wo sie beispielsweise getrennte Speicherbereiche belegen. Unabhängig davon können die Speichereinrichtungen 26, 28 beispielsweise ein Festplatten (HDD)- oder CD/DVD-Laufwerk, ein Halbleiterlaufwerk/Solid-State-Disk (SSD), oder Kombinationen davon, oder andere Speichereinrichtungen für digitale Daten umfassen.

Gemäss der hier beschriebenen Technologie sendet das mobile Gerät 6 seine gerätespezifische Kennung zum Transceiver 14 sobald es in Funkreichweite zum Transceiver 14 ist. Der Prozessor 20 steuert die Speicherung der empfangenen Kennung als Datensatz in der Zwischenspeichereinrichtung 28. In der in Fig. 1 gezeigten Situation halten sich mehrere Nutzer 2 in der öffentlichen Zone 10 auf. Dabei ist beispielhaft angenommen, dass die mobilen Geräte 6 der anwesenden Nutzer 2 für die Nutzung der hier beschriebenen Technologie, u.a. Senden einer Kennung, ausgestaltet sind. Von den anwesenden Nutzern 2 können einige Zugang zur zugangsbeschränkten Zone 8 wünschen, einige können von der Zone 8 kommend auf dem Weg zu einem Gebäudeausgang sein und wiederum andere können auf dem Weg zu einem anderen Teil des Gebäudes sein. Das bedeutet in der gezeigten Situation, dass nicht jeder Nutzer 2, der sich in der öffentlichen Zone 10 aufhält, auch tatsächlich in die Zone 8 gelangen möchte. Aus Sicht des Zugangskontrollsystems 1 sind jedoch alle anwesenden Nutzer 2 potentielle Nutzer 2, die früher oder später Zugang wünschen könnten.

Die Zwischenspeichereinrichtung 28 speichert in einer solchen Situation für jeden anwesenden Nutzer 2 einen Datensatz, der die Kennung des dem Nutzer 2 zugeteilten mobilen Geräts 6 und das Kennwort enthält. Dabei kann es sich sowohl um mobile Geräte 6 handeln, deren Nutzer 2 als zugangsberechtige Nutzer 2 im Zugangskontrollsystem 1 registriert sind, als auch um mobile Geräte 6, deren Nutzer 2 nicht registriert sind. Verlässt ein Nutzer 2 die öffentliche Zone 10, so dass sich das zugehörige mobile Gerät 6 ausserhalb der Funkreichweite befindet, wird der für diesen Nutzer 2 angelegte Datensatz in der Zwischenspeichereinrichtung 28 gelöscht und die Zwischenspeichereinrichtung 28 aktualisiert.

Das Zugangskontrollsystem 1 ermittelt die anwesenden Nutzer 2 mit Hilfe der Kommunikation zwischen den mobilen Geräten 6 und dem Transceiver 14. In jedem mobilen Gerät 6 ist ein Funkmodul, beispielsweise ein Modul gemäss einem Bluetooth Standard, aktiviert, um mit dem Transceiver 14 kommunizieren zu können, sobald es sich in Funkreichweite zum Transceiver 14 befindet. Das mobile Gerät 6 ist zum Senden der gerätespezifischen Kennung und, je nach Ausgestaltung, auch des Kennworts entsprechend konfiguriert. Es kann z. B. eine anwendungsspezifische Softwareanwendung (auch als App bezeichnet) aufweisen, die beispielsweise durch den Nutzer 2 aktivierbar ist. Die anwendungsspezifische Softwareanwendung wird in einem Ausführungsbeispiel in Verbindung mit der Zugangskontrolle und der Nutzung von Aufzügen verwendet. Die anwendungsspezifische Software erzeugt in einem Ausführungsbeispiel eine für das mobile Gerät 6 einzigartige und zeitlich unveränderliche Kennung. Eine solche durch Software erzeugte Kennung stellt eine Alternative zu der oben genannten Geräteidentifikationsnummer und einer Telefonnummer dar. Das Kennwort kann in entsprechender Weise erzeugt werden. In einem Ausführungsbeispiel empfängt das mobile Gerät 6 das Kennwort vom Zugangskontrollsystem 1 und speichert es in einer Speichereinrichtung des mobilen Geräts 6.

Für jeden registrierten Nutzer 2 ist im Zugangskontrollsystem 1 ein Nutzerprofil angelegt, d. h. es ist als Datensatz in einer Datenbank 34 gespeichert. Die Datenbank 34 ist in einem Ausführungsbeispiel in der Speichereinrichtung 26 eingerichtet. Das Nutzerprofil umfasst persönliche Daten des Nutzers 2 (z. B. Name, Berechtigungsgrund (Bewohner, Mitarbeiter, externer Dienstleister, Besucher)), Zugangsberechtigungen (z. B. bestimmte Räume 4 und Stockwerke) und evtl. zeitliche Zugangsbeschränkungen (z. B. Zugang von Montag bis Freitag, von 7:00 bis 20:00). Im Nutzerprofil ist dem Nutzer 2 ausserdem mindestens ein mobiles Gerät 6 zugeordnet. Alternativ zum Anlegen des Nutzerprofils im Zugangskontrollsystem 1 kann das Nutzerprofil in einer Datenbank eines Gebäudeverwaltungssystems angelegt sein, wobei das Zugangskontrollsystem 1 auf diese Datenbank mittels eines Kommunikationsnetzes zugreifen kann.

Wünscht einer der anwesenden Nutzer 2 Zugang zur zugangsbeschränkten Zone 8, präsentiert der Nutzer 2 das Kennwort, das die Codeerfassungseinrichtung 16 erfasst und dem Codeauswertemodul 22 zuführt. Das Codeauswertemodul 24 startet einen Suchalgorithmus, um zu ermitteln, ob das erfasste Kennwort in der Zwischenspeichereinrichtung 28 einem anwesenden Nutzer 2 zugeordnet werden kann. Stimmt das erfasste Kennwort mit einem gespeicherten Kennwort überein, ist aus der Gruppe der Nutzer 2 derjenige Nutzer 2 erkannt, der zu diesem Zeitpunkt Zugang wünscht.

Das mobile Gerät 6 kann beispielsweise ein Mobiltelefon, ein Smartphone, ein Tablet PC oder eine Smartwatch sein, wobei diese Geräte üblicherweise mit Hardware ausgestattet sind, die eine Kommunikation über ein Nahfeld-Funknetz ermöglichen. Das mobile Gerät 6 kann aber auch eine Brille mit Miniaturcomputer oder ein anderes am Körper getragenes, computergestütztes Gerät (auch als "Wearable Device" bezeichnet) sein, wenn diese Geräte für eine Nahfeld-Kommunikation und zur Speicherung von Daten vorgesehen sind. Je nach Ausgestaltung des mobilen Geräts 6 kann es z. B. über ein graphisches Nutzerinterface (auch als Graphical User Interface, GUI, bezeichnet) verfügen, um das mobile Gerät 6 und dessen Funktionen selektiv aktivieren und deaktivieren zu können.

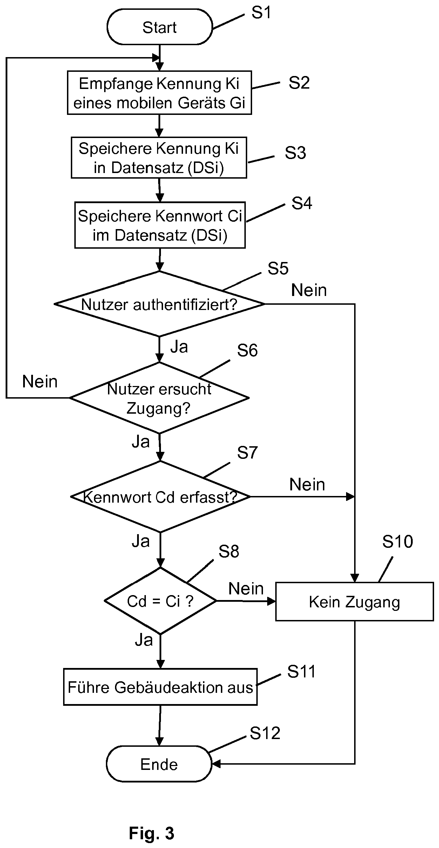

Mit dem Verständnis der oben beschriebenen prinzipiellen Systemkomponenten und deren Funktionalitäten, erfolgt im Folgenden in Verbindung mit Fig. 3 eine Beschreibung eines beispielhaften Zugangskontrollverfahrens als ein Aspekt eines Verfahrens zum Betreiben des Zugangskontrollsystems 1. Die Beschreibung erfolgt mit Bezug auf einen Nutzer 2, der am Zugang 12 die zugangsbeschränkte Zone 8 zu betreten wünscht, beispielsweise um dort einen Aufzug zu benutzen. Der Nutzer 2 trägt das mobile Gerät 6 bei sich und hat dessen Funkmodul (z. B. für Bluetooth-Kommunikation) aktiviert. Eine dazugehörige Softwareanwendung ist ebenfalls aktiviert. Das Verfahren beginnt in einem Schritt **S1** und endet in einem Schritt **S12.**

Befindet sich der Nutzer 2 mit seinem mobilen Gerät 6 in der öffentlichen Zone 10 und in Funkreichweite zum Transceiver 14, empfängt der Transceiver 14 in einem Schritt **S2** eine vom mobilen Gerät 6 ausgesendete gerätespezifische Kennung Ki. Der Transceiver 14 und das mobile Gerät 6 kommunizieren gemäss dem gleichen Kommunikationsstandard, in diesem Ausführungsbeispiel über eine Funkverbindung gemäss einem Bluetooth Standard.

Die empfangene Kennung Ki wird in einem Schritt **S3** gespeichert. Die Kennung Ki wird in einem dafür angelegten Datensatz DSi in der Zwischenspeichereinrichtung 28 gespeichert.

In einem Schritt S4 wird ausserdem ein Kennwort Ci im für die Kennung Ki angelegten Datensatzes DSi gespeichert. In einem Ausführungsbeispiel sendet das mobile Gerät 6 das Kennwort Ci. Der Transceiver 14 empfängt in diesem Fall ausserdem das Kennwort Ci des Nutzers 2. Die Kennung Ki und das Kennwort Ci können im Wesentlichen gleichzeitig oder zeitlich nacheinander vom mobilen Gerät 6 gesendet werden. Entsprechend dazu kann deren Speicherung im Wesentlichen gleichzeitig oder zeitlich nacheinander erfolgen.

In einem Ausführungsbeispiel erzeugt das Zugangskontrollsystem 1 das Kennwort Ci und speichert es im für die empfangene Kennung Ki angelegten Datensatz DSi sobald sich der Nutzer 2 mit seinem mobilen Gerät 6 in der öffentlichen Zone 10 und in Funkreichweite zum Transceiver 14 befindet. Das Zugangskontrollsystem 1 sendet das Kennwort Ci zum mobilen Gerät 6 des Nutzers 2. Auch in diesem Fall speichert der Datensatz DSi für diesen Nutzer 2 sowohl die Kennung Ki als auch das Kennwort Ci

Die Schritte **S2** - **S4** werden für jedes mobile Gerät 6 ausgeführt, das sich in Funkreichweite zum Transceiver 14 befindet und gemäss dem gleichen Kommunikationsstandard arbeitet wie der Transceiver 14. Je nach Anzahl der Nutzer 2 in der öffentlichen Zone 10 kann zu einem bestimmten Zeitpunkt eine Vielzahl von Kennungen und dazugehörigen Kennwörtern, entsprechend einer Gruppe von anwesenden Nutzern 2, in der Zwischenspeichereinrichtung 28 gespeichert sein. Der Fachmann erkennt, dass die Zwischenspeichereinrichtung 28 aktualisiert wird, wenn ein mobiles Gerät 6 nicht mehr in Funkreichweite ist, z. B. weil der dazugehörige Nutzer 2 die öffentliche Zone 10 verlassen hat ohne Zugang zur zugangsbeschränkten Zone 8 zu wünschen oder weil der dazugehörige Nutzer 2 bereits die zugangsbeschränkte Zone 8 betreten hat. Die Zwischenspeichereinrichtung 28 speichert somit die Datensätze für Nutzer 2, die zu einem bestimmten Zeitpunkt in der öffentlichen Zone 10 anwesend sind.

In einem Schritt S5 wird ermittelt, ob der Nutzer 2 authentifiziert werden kann. Dies erfolgt mittels der empfangenen Kennung Ki. Kann die empfangene Kennung Ki einem im Zugangskontrollsystem 1 gespeicherten Nutzerprofil zugeordnet werden, ist der Nutzer 2 als zugangsberechtigt authentifiziert. Kann der Nutzer 2 authentifiziert werde, schreitet das Verfahren entlang des Ja-Zweiges zu einem Schritt S6. Kann der Nutzer 2 dagegen nicht authentifiziert werden, schreitet das Verfahren entlang des Nein-Zweiges zu einen Schritt **S10,** in dem der Nutzer 2 als nicht zugangsberechtigt betrachtet wird. Ein solche Authentifizierung erfolgt für jeden anwesenden Nutzer 2.

Im Schritt **S6** wird ermittelt, ob einer der anwesenden Nutzer 2 Zugang zur zugangsbeschränkten Zone 8 wünscht. Das Zugangskontrollsystem 1 erkennt diesen Wunsch mit Hilfe der Codeerfassungseinrichtung 16, wenn der Nutzer 2 das ihm zugeordnete Kennwort Cd präsentiert. In einem Ausführungsbeispiel hält der Nutzer 2 das mobile Gerät 6 in die Nähe der Codeerfassungseinrichtung 16, damit sie das auf der Anzeigeeinrichtung des mobilen Geräts 6 als optischen Code dargestellte Kennwort Cd erfassen kann. Wird ein Zugangswunsch erkannt, schreitet das Verfahren entlang des Ja-Zweiges zu einem Schritt **S7.** Andernfalls schreitet das Verfahren entlang des Nein-Zweiges zurück zum Schritt **S2.**

In einem Schritt **S7** wird mittels des in Schritt **S6** erfassten Kennworts Cd ermittelt, ob dieses einem in der Zwischenspeichereinrichtung 28 gespeicherten Kennwort Ci zugeordnet werden kann. Ist dies der Fall, ist aus der Gruppe der anwesenden Nutzer 2 derjenige Nutzer 2 erkannt, der zu diesem Zeitpunkt Zugang wünscht. In diesem Fall schreitet das Verfahren entlang des Ja-Zweiges zu einem Schritt **S11,** in dem für diesen Nutzer 2 eine nutzerspezifische Gebäudeaktion ausgeführt wird. Die Gebäudeaktion kann beispielsweise darin bestehen, dass für den Nutzer 2 ein Zielruf (gemäss den Daten des für diesen Nutzer 2 bestehenden Nutzerprofils) ausgelöst wird, diesem Zielruf ein Aufzug zugewiesen wird und der zugewiesene Aufzug dem Nutzer 2 am Zugang 12 angezeigt wird. Die Gebäudeaktion kann auch darin bestehen, dass eine oder mehrere Türen entriegelt werden, an denen dieser Nutzer 2 zugangsberechtigt ist. Der Fachmann erkennt, dass diese Gebäudeaktionen auch in Kombination ausgeführt werden können.

Ist dagegen dem erfassten Kennwort Cd kein in der Zwischenspeichereinrichtung 28 gespeicherten Kennwort Ci zugeordnet, schreitet das Verfahren entlang des Nein-Zweiges zum Schritt **S10** und dem Nutzer 2 wird der Zugang verwehrt. Je nach Ausgestaltung kann eine Benachrichtigung den Nutzer 2 beispielsweise darüber informieren, dass dass sich der Nutzer 2 an einen Gebäudeverantwortlichen (z. B. Empfangspersonal, Sicherheitspersonal) wenden soll. Unabhängig davon kann im Schritt **S10** auch das Sicherheitspersonal direkt benachrichtigt werden.

In einem Ausführungsbeispiel ist das Zugangskontrollsystem 1 mit einem Aufzugsystem verbunden, insbesondere mit einer Aufzugsteuerung. Die Kommunikation zwischen dem Zugangskontrollsystem 1 und der Aufzugsteuerung kann über ein im Gebäude vorhandenes Kommunikationsnetzwerk erfolgen. Geschieht die Zugangskontrolle beispielsweise in der Eingangshalle des Gebäudes, die die Nutzer 2 passieren müssen, um zu den Aufzügen zu gelangen, kann bei jeder Zugangsgewährung für den betreffenden Nutzer 2 ein Zielruf veranlasst werden. Die Aufzugsteuerung des Aufzugssystems verarbeitet den Zielruf und teilt ihm einen Aufzug zu. Der dem Zielruf zugeteilte Aufzug kann dem Nutzer 2 beispielsweise durch ein Terminal am Zugang 12 angezeigt und/oder mittels Sprache mitgeteilt werden. Der Nutzer 2 kann somit ohne einen Aufzugsruf eingeben zu müssen direkt zum zugeteilten Aufzug gehen.

Je nach Ausgestaltung des Gebäudes und der Handhabung der Zugangsberechtigungen, kann das Zugangskontrollsystem 1 auch Besuchern Zugang gewähren und für die Besucher festgelegte Gebäudeaktionen veranlassen. In Verbindung mit einer Aufzugssteuerung kann beispielhafte als Gebäudeaktion einen Zielruf für den Besucher erzeugt werden. Ein zugewiesener Aufzug transportiert den Besucher auf das Stockwerk, auf dem sich der Gastgeber befindet. Das Stockwerk des Gastgebers ist beispielsweise in einem für den Besucher temporär angelegten Besucherprofil in Verbindung mit anderen Einladungsdaten (z. B. Datum, Zeit, Gastgeber) gespeichert. Der Besucher, vor allem wenn er erstmalig im Gebäude ist, braucht sich somit nicht mit der Eingabe des Zielstockwerks zu befassen. Dem Besucher kann außerdem weitere Information zur Verfügung gestellt werden, um sich im Gebäude besser orientieren zu können, beispielsweise kann dem Besucher mitgeteilt werden, in welche Richtung (eventuell auch wie weit) er nach dem Aussteigen auf dem Stockwerk gehen soll. Die Mitteilung solcher Wegeleitungs-Information kann beispielsweise mittels des mobilen Geräts 6 des Besuchers und/oder Anzeigen auf den Stockwerken oder in der Aufzugskabine erfolgen. In einem Ausführungsbeispiel erzeugt und sendet das Zugangskontrollsystem 1 eine Nachricht für den Gastgeber, die den Gastgeber darüber informiert, dass dem Besucher Zugang gewährt wurde. Der Gastgeber kann sich somit zeitnah auf das Erscheinen des Besuchers vorbereiten.

## Patentansprüche

1. Verfahren zum Betreiben eines Systems (1) zur Kontrolle eines Zugangs zu einer zugangsbeschränkten Zone (8) in einem Gebäude oder auf einem Gelände, wobei das System (1) eine Sende- und Empfangseinrichtung (14) zur Funkkommunikation mit von Nutzern (2) mitgeführten mobilen elektronischen Geräten (6), eine Speichereinrichtung (26, 28), eine Prozessoreinrichtung (20) und eine Codeverarbeitungseinrichtung (16, 22) umfasst, wobei das Verfahren umfasst:
Empfangen einer ersten Kennung (Ki) eines ersten mobilen elektronischen Geräts (6) eines ersten Nutzers (2) durch die Sende- und Empfangseinrichtung (14), wenn sich das erste mobile elektronische Gerät (6) in einer öffentlichen Zone (10) befindet, von der aus der erste Nutzer (2) Zugang zur zugangsbeschränkten Zone (8) ersuchen kann;
Speichern der empfangenen ersten Kennung (Ki) in der Speichereinrichtung (26, 28), wobei für die erste Kennung (Ki) ein erster Datensatz (DSi) angelegt wird, der dem in der öffentlichen Zone (10) anwesenden ersten Nutzer (2) zugeordnet ist, und wobei in der Speichereinrichtung (26, 28) eine Vielzahl von Datensätzen speicherbar ist, wobei jeder Datensatz einem in der öffentlichen Zone (10) anwesenden Nutzern (2) zugeordnet ist;
Speichern eines ersten Kennworts (Ci) im ersten Datensatz (DSi), so dass das erste Kennwort (Ci) der ersten Kennung (Ki) zugeordnet ist;
Ermitteln durch die Prozessoreinrichtung (20), ob die erste Kennung (Ki) in einer Datenbank (34) einem Nutzerprofil zugeordnet ist, um, wenn eine solche Zuordnung besteht, den ersten Nutzer (2) als zugangsberechtigt zu authentifizieren;
Erfassen eines vom ersten Nutzer (2) präsentierten Kennworts (Cd) durch die Codeverarbeitungseinrichtung (16, 22), wenn der erste Nutzer (2) Zugang zur zugangsbeschränkten Zone (8) ersucht; und
Ermitteln durch die Prozessoreinrichtung (20), ob das erfasste Kennwort (Cd) mit dem im ersten Datensatz (DSi) der Speichereinrichtung (26, 28) gespeicherten ersten Kennwort (Ci) übereinstimmt, wobei bei Übereinstimmung der erste Nutzer (2) als zugangsersuchender Nutzer (2) erkannt wird.

2. Verfahren nach Anspruch 1, ausserdem umfassend Erzeugen eines Ergebnissignals, das ein Ausführen einer Gebäudeaktion veranlasst, wenn das erfasste Kennwort (Cd) mit dem ersten Kennwort (Ci) übereinstimmt.

3. Verfahren nach Anspruch 2, ausserdem aufweisend Lesen eines in der Datenbank (34) gespeicherten Nutzerprofils des ersten Nutzers (2), um eine nutzerspezifische Gebäudeaktion zu ermitteln.

4. Verfahren nach Anspruch 3, beim dem die nutzerspezifische Gebäudeaktion ein Entriegeln einer Gebäudetür, an der der erste Nutzer (2) zugangsberechtigt ist, oder ein Registrieren eines Zielrufs auf ein für den ersten Nutzer (2) festgelegtes Zielstockwerk, oder eine Kombination aus dem Entriegeln einer Gebäudetür und dem Registrieren eines Zielrufs umfasst.

5. Verfahren nach einem der Ansprüche 2-4, ausserdem aufweisend Erzeugen eines Steuersignals als Funktion des Ergebnissignals, um eine Barriere (18, 36) freizugeben, damit der Nutzer (2) die zugangsbeschränkte Zone (8) betreten kann.

6. Verfahren nach einem der vorhergehenden Ansprüche, bei dem die Codeverarbeitungseinrichtung (16, 22) ausgestaltet ist, um das erfasste Kennwort (Cd) von einer Anzeigeeinrichtung des mobilen elektronischen Geräts (6), die das erfasste Kennwort (Cd) in maschinenlesbarer Form darstellt, zu erfassen.

7. Verfahren nach Anspruch 6, bei dem das dargestellte Kennwort ein numerischer Code, ein alphanumerischer Code, ein Strichcode, ein QR-Code oder ein Farbcode ist.

8. Verfahren nach einem der Ansprüche 1-5, bei dem die Codeverarbeitungseinrichtung (16, 22) ausgestaltet ist, um das erfasste Kennwort (Cd) von einem Datenträger, auf dem das erfasste Kennwort (Cd) dargestellt oder gespeichert ist, zu erfassen.

9. Verfahren nach einem der vorhergehenden Ansprüche, bei dem die Funkverbindung zwischen der Sende- und Empfangseinrichtung (14) und einem mobilen elektronischen Gerät (6) eines Nutzers (2) gemäss einem Bluetooth-Standard oder einem WLAN/WiFi-Standard erfolgt, und wobei die Sende- und Empfangseinrichtung (14) die erste Kennung (Ki) über die Funkverbindung empfängt, wenn sich das mobile elektronische Gerät (6) in Funkreichweite der Sende- und Empfangseinrichtung (14) befindet.

10. Verfahren nach einem der vorhergehenden Ansprüche, bei dem die erste Kennung (Ki) von einer anwendungsspezifischen Software, die auf dem mobilen Gerät (6) aktiv ist, erzeugt ist, wobei die erste Kennung (Ki) zeitlich unveränderlich ist.

11. Verfahren nach einem der Ansprüche 1-10, bei dem die erste Kennung (Ki) eine Geräteidentifikationsnummer oder eine einem mobilen Gerät (6) zugeordnete Telefonnummer umfasst.

12. Verfahren nach einem der vorhergehenden Ansprüche, bei dem die erste Kennung (Ki) und das erste Kennwort (Ci) durch die Sende- und Empfangseinrichtung (14) empfangen werden, wenn sich das erste mobile elektronische Geräte (6) in der öffentlichen Zone (10) befindet und die erste Kennung (Ki) und das erste Codewort (Ci) aussendet.

13. Verfahren nach einem der vorhergehenden Ansprüche, bei dem, wenn sich eine Vielzahl von mobilen elektronischen Geräten (6) in der öffentlichen Zone (10) befindet, für jedes mobile elektronische Gerät (6) eines Nutzers (2), das eine erste Kennung (Ki) und ein erstes Kennwort (Ci) sendet, in der Speichereinrichtung (26, 28) ein Datensatz gespeichert wird (DSi).

14. System (1) zur Kontrolle eines Zugangs zu einer zugangsbeschränkten Zone (8) in einem Gebäude oder auf einem Gelände, wobei das System (1) umfasst:
eine Sende- und Empfangseinrichtung (14) zur Funkkommunikation mit einem von einem ersten Nutzer (2) mitgeführten ersten mobilen elektronischen Gerät (6), die zu einem Empfang einer ersten Kennung (Ki) des ersten mobilen elektronischen Geräts (6) ausgestaltet ist, wenn sich das erste mobile elektronische Gerät (6) in einer öffentlichen Zone (10) befindet, von der aus der erste Nutzer (2) Zugang zur zugangsbeschränkten Zone (8) ersuchen kann;
eine Speichereinrichtung (26, 28), die ausgestaltet ist, um für die erste Kennung (Ki) einen ersten Datensatz (DSi) anzulegen, der dem in der öffentlichen Zone (10) anwesenden ersten Nutzer (2) zugeordnet ist, und um ein erstes Kennwort (Ci) im ersten Datensatz (DSi) zu speichern, so dass das erste Kennwort (Ci) der ersten Kennung (Ki) zugeordnet ist, wobei in der Speichereinrichtung (26, 28) eine Vielzahl von Datensätzen speicherbar ist;
eine Codeverarbeitungseinrichtung (16, 22), die ausgestaltet ist, um ein vom ersten Nutzer (2) präsentiertes Kennwort (Cd) zu erfassen, wenn der erste Nutzer (2) Zugang zur zugangsbeschränkten Zone (8) ersucht; und
eine Prozessoreinrichtung (20), die ausgestaltet ist,
- zu ermitteln, ob die erste Kennung (Ki) in einer Datenbank (34) einem Nutzerprofil zugeordnet ist,
- wenn eine solche Zuordnung besteht, den ersten Nutzer (2) als zugangsberechtigt zu authentifizieren, und
- zu ermitteln, ob das erfasste Kennwort (Cd) mit dem im ersten Datensatz (DSi) der Speichereinrichtung (26, 28) gespeicherten ersten Kennwort (Ci) übereinstimmt, wobei bei Übereinstimmung der erste Nutzer (2) als zugangsersuchender Nutzer (2) erkannt wird.

15. System (1) nach Anspruch 14, bei dem die Prozessoreinrichtung (20) ausserdem ausgestaltet ist, um ein Ergebnissignal zu erzeugen, das bei Übereinstimmung ein Ausführen einer Gebäudeaktion veranlasst.

## Claims

1. A method for operating a system (1) for controlling access to an access-restricted area (8) in a building or a compound, wherein the system (1) comprises a transmitter and receiver unit (14) for the radio communication with mobile electronic devices (6) carried along by users (2), a storage unit (26, 28), a processing unit (20) and a code processing unit (16, 22), and wherein the method comprises the steps of:
receiving a first identifier (Ki) of a first mobile electronic device (6) of a first user (2) by means of the transmitter and receiver unit (14) when the first mobile electronic device (6) is located in a public area (10), from which the first user (2) can request access to the access-restricted area (8);
storing the received first identifier (Ki) in the storage unit (26, 28), wherein a first dataset (DSi) is created for the first identifier (Ki) and assigned to the first user (2) present in the public area (10), wherein a plurality of datasets can be stored in the storage unit (26, 28), and wherein each dataset is assigned to a user (2) present in the public area (10);
storing a first password (Ci) in the first dataset (DSi) such that the first code word (Ci) is assigned to the first identifier (Ki);
determining if the first identifier (Ki) is assigned to a user profile in a database (34) by means of the processor unit (20) in order to authenticate the first user (2) as having access authorization in the event of such an assignment;
acquiring a password (Cd) presented by the first user (2) by means of the code processing unit (16, 22) when the first user (2) requests access to the access-restricted area (8); and
determining if the acquired password (Cd) matches the first password (Ci) stored in the first dataset (DSi) of the storage unit (26, 28) by means of the processor unit (20), wherein the first user (2) is recognized as an access-requesting user (2) in the event of a match.

2. The method according to claim 1, furthermore comprising the step of generating a result signal, which initiates a building action if the acquired password (Cd) matches the first password (Ci).

3. The method according to claim 2, furthermore comprising the step of reading a user profile of the first user (2), which is stored in a database (34), in order to determine a user-specific building action.

4. The method according to claim 3, wherein the user-specific building action comprises unlocking a building door, to which the first user (2) has access authorization, or registering a destination call to a destination floor defined for the first user (2) or a combination of unlocking a building door and registering a destination call.

5. The method according to one of claims 2-4, furthermore comprising the step of generating a control signal as a function of the result signal in order to release a barrier (18, 36) such that the user (2) can enter the access-restricted area (8).

6. The method according to one of the preceding claims, wherein the code processing unit (16, 22) is designed for acquiring the acquired password (Cd) from a screen of the mobile electronic device (6), on which the acquired password (Cd) is displayed in machine-readable form.

7. The method according to claim 6, wherein the displayed password is a numeric code, an alphanumeric code, a barcode, a QR code or a color code.

8. The method according to one of claims 1-5, wherein the code processing unit (16, 22) is designed for acquiring the acquired password (Cd) from a data carrier, on which the acquired password (Cd) is displayed or stored.

9. The method according to one of the preceding claims, wherein the radio link between the transmitter and receiver unit (14) and a mobile electronic device (6) of a user (2) is realized in accordance with a Bluetooth standard or a WLAN/WiFi standard, and wherein the transmitter and receiver unit (14) receives the first identifier (Ki) via the radio link when the mobile electronic device (6) is located in the radio range of the transmitter and receiver unit (14).

10. The method according to one of the preceding claims, wherein the first identifier (Ki) is generated by application-specific software, which is active on the mobile device (6), and wherein the first identifier (Ki) is time-invariant.

11. The method according to one of claims 1-10, wherein the first identifier (Ki) comprises a device identification number or a telephone number assigned to a mobile device (6).

12. The method according to one of the preceding claims, wherein the first identifier (Ki) and the first password (Ci) are received by the transmitter and receiver unit (14) when the first mobile electronic device (6) is located in the public area (10) and transmits the first identifier (Ki) and the first code word (Ci).

13. The method according to one of the preceding claims, wherein a dataset (DSi) is stored in the storage unit (26, 28) for each mobile electronic device (6) of a user (2), which transmits a first identifier (Ki) and a first password (Ci), when a plurality of mobile electronic devices (6) are located in the public area (10).

14. A system (1) for controlling access to an access-restricted area (8) in a building or a compound, wherein the system (1) comprises:
a transmitter and receiver unit (14) for the radio communication with a first mobile electronic device (6) carried along by a first user (2), wherein said transmitter and receiver unit is designed for receiving a first identifier (Ki) of the first mobile electronic device (6) when the first mobile electronic device (6) is located in a public area (10), from which the first user (2) can request access to the access-restricted area (8);
a storage unit (26, 28) that is designed for creating a first dataset (DSi), which is assigned to the first user (2) present in the public area (10), for the first identifier (Ki) and for storing a first password (Ci) in the first dataset (DSi) such that the first password (Ci) is assigned to the first identifier (Ki), wherein a plurality of datasets can be stored in the storage unit (26, 28);
a code processing unit (16, 22) that is designed for acquiring a password (Cd) presented by the first user (2) when the first user (2) requests access to the access-restricted area (8); and
a processor unit (20) that is designed for
- determining if the first identifier (Ki) is assigned to a user profile in a database (34),
- authenticating the first user (2) as having access authorization in the event of such an assignment, and
- determining if the acquired password (Cd) matches the first password (Ci) stored in the first dataset (DSi) of the storage unit (26, 28), wherein the first user (2) is recognized as an access-requesting user (2) in the event of a match.

15. The system (1) according to claim 14, wherein the processor unit (20) is furthermore designed for generating a result signal, which initiates a building action in the event of a match.

## Revendications

1. Procédé opérationnel d'un système (1) de contrôle d'un accès à une zone (8) à accès réglementé dans un bâtiment ou sur un terrain, le système (1) comprenant un dispositif émetteur et récepteur (14) pour la communication radio avec des appareils (6) électroniques mobiles embarqués par des utilisateurs (2), un dispositif de mémoire (26, 28), un dispositif de processeur (20) et un dispositif de traitement de codes (16, 22), le procédé comprenant les étapes consistant dans :
la réception d'une première identification (Ki) d'un premier appareil (6) électronique mobile d'un premier utilisateur (2) par le dispositif émetteur et récepteur (14), lorsque le premier appareil (6) électronique mobile se trouve dans une zone (10) publique à partir de laquelle le premier utilisateur (2) peut demander un accès à une zone (8) à accès réglementé ;
la mémorisation de la première identification (Ki) réceptionnée dans le dispositif de mémoire (26, 28), pour la première identification (Ki) étant créé un premier jeu de données (DSi) qui est associé au premier utilisateur (2) présent dans la zone (10) publique, et dans le dispositif de mémoire (26, 28) étant susceptible d'être mémorisée une pluralité de jeux de données, chaque jeu de données étant associé à un utilisateur (2) présent dans la zone (10) publique ;
la mémorisation d'un premier identifiant (Ci) dans le premier jeu de données (DSi), de sorte que le premier identifiant (Ci) soit associé à la première identification (Ki) ;
la détermination par le dispositif de processeur (20) si la première identification (Ki) est associée dans une base de données (34) à un profil d'utilisateur, pour si une telle association existe, authentifier le premier utilisateur (2) comme étant autorisé à l'accès ;
la détection par le dispositif de traitement de codes (16, 22) d'un identifiant (Cd) présenté par le premier utilisateur (2), lorsque le premier utilisateur (2) demande un accès à la zone (8) à accès réglementé ; et
la détermination par le dispositif de processeur (20), si l'identifiant (Cd) détecté concorde avec le premier identifiant (Ci) mémorisé dans le premier jeu de données (DSi) du dispositif de mémoire (26, 28), dans le cas d'une concordance, le premier utilisateur (2) étant reconnu comme utilisateur (2) demandant l'accès.

2. Procédé selon la revendication 1, comprenant par ailleurs la génération d'un signal de résultat, qui initie une réalisation d'une action sur le bâtiment, lorsque l'identifiant (Cd) détecté concorde avec le premier identifiant (Ci).

3. Procédé selon la revendication 2, comportant par ailleurs la lecture d'un profil d'utilisateur du premier utilisateur (2) mémorisé dans la base de données (34), pour déterminer une action sur le bâtiment qui est spécifique à l'utilisateur.

4. Procédé selon la revendication 3, pour lequel l'action sur le bâtiment spécifique à l'utilisateur comprend un déverrouillage d'une porte de bâtiment dont l'accès est autorisé au premier utilisateur (2) ou un enregistrement d'un appel de destination vers un étage de destination fixé pour le premier utilisateur (2) ou une association du déverrouillage d'une porte de bâtiment et de l'enregistrement d'un appel de destination.

5. Procédé selon l'une quelconque des revendications 2 à 4, comportant par ailleurs une génération d'un signal de commande, en tant que fonction du signal de résultat, pour libérer une barrière (18, 36), pour que l'utilisateur (2) puisse entrer dans la zone (8) à accès réglementé.

6. Procédé selon l'une quelconque des revendications précédentes, pour lequel le dispositif de traitement de codes (16, 22) est conçu pour détecter l'identifiant (Cd) détecté à partir d'un dispositif d'affichage de l'appareil (6) électronique mobile qui présente l'identifiant (Cd) détecté sous une forme lisible par machine.

7. Procédé selon la revendication 6, lors duquel l'identifiant est un code numérique, un code alphanumérique, un code-barres, un QR code ou un code couleur.

8. Procédé selon l'une quelconque des revendications 1 à 5, pour lequel le dispositif de traitement de codes (16, 22) est conçu pour détecter l'identifiant (Cd) détecté à partir d'un support de données, sur lequel l'identifiant (Cd) détecté est présenté ou mémorisé.

9. Procédé selon l'une quelconque des revendications précédentes, pour lequel la connexion radio entre le dispositif émetteur et récepteur (14) et un appareil (6) électronique mobile d'un utilisateur (2) s'effectue selon un standard Bluetooth ou un standard WLAN/WiFi, et le dispositif émetteur et récepteur (14) réceptionnant la première identification (Ki) via la connexion radio, lorsque l'appareil (6) électronique mobile se trouve à portée radio du dispositif émetteur et récepteur (14).

10. Procédé selon l'une quelconque des revendications précédentes, lors duquel la première identification (Ki) est générée par un logiciel spécifique à l'application, qui est actif sur l'appareil (6) mobile, la première identification (Ki) étant temporellement invariable.

11. Procédé selon l'une quelconque des revendications 1 à 10, pour lequel la première identification (Ki) comprend un numéro d'identification d'appareil ou un numéro de téléphone associé à un appareil (6) mobile.

12. Procédé selon l'une quelconque des revendications précédentes, lors duquel la première identification (Ki) et le premier identifiant (Ci) sont réceptionnés par le dispositif émetteur et récepteur (14) lorsque le premier appareil (6) électronique mobile se trouve dans la zone publique (10) et émet la première identification (Ki) et le premier mot de passe (Ci).

13. Procédé selon l'une quelconque des revendications précédentes, lors duquel lorsqu'une pluralité d'appareils (6) électroniques mobiles se trouve dans la zone publique (10), un jeu de données est mémorisé (DSi) dans le dispositif de mémoire (26, 28) pour chaque appareil (6) électronique mobile d'un utilisateur (2) qui émet une première identification (Ki) et un premier identifiant (Ci),

14. Système (1), destiné à contrôler un accès à une zone (8) à accès réglementé dans un bâtiment ou sur un terrain, le système (1) comprenant :
un dispositif émetteur et récepteur (14) pour la communication radio avec un premier appareil (6) électronique mobile, embarqué par un premier utilisateur (2), qui est conçu pour réceptionner une première identification (Ki) du premier appareil (6) électronique mobile, lorsque le premier appareil (6) électronique mobile se trouve dans une zone publique (10) à partir de laquelle le premier utilisateur (2) peut demander l'accès à la zone (8) à accès réglementé ;
un dispositif de mémoire (26, 28), qui est conçu pour créer aux fins de la première identification (Ki) un premier jeu de données (DSi), qui est associé à l'utilisateur (2) qui est présent dans la zone (10) publique, et pour mémoriser un premier identifiant (Ci) dans le premier jeu de données (DSi), de sorte que le premier identifiant (Ci) soit associé à la première identification (Ki), dans le dispositif de mémoire (26, 28) étant susceptible d'être mémorisée une pluralité de jeux de données ;
un dispositif de traitement de codes (16, 22), qui est conçu pour détecter un identifiant (Cd) présenté par la premier utilisateur (2), lorsque le premier utilisateur (2) demande l'accès à la zone (8) à accès réglementé ; et
un dispositif de processeur (20), qui est conçu
- pour déterminer si la première identification (Ki) est associée à un profil d'utilisateur dans une base de données (34),
- lorsqu'une telle association existe, pour authentifier le premier utilisateur (2) comme étant autorisé à l'accès, et
- pour déterminer si l'identifiant (Cd) détecté concorde avec le premier identifiant (Ci) mémorisé dans le jeu de données (DSi) du dispositif de mémoire (26, 28), lors d'une concordance, le premier utilisateur (2) étant identifié comme utilisateur (2) demandant l'accès.

15. Système (1) selon la revendication 14, sur lequel le dispositif de processeur (20) est conçu par ailleurs pour générer un signal de résultat, qui lors d'une concordance, initie une réalisation d'une action sur le bâtiment.
